(19) Europäisches Patentamt

European Patent Office

Office européen des brevets

(11) Veröffentlichungsnummer: **0 317 994 B1**

(12) **EUROPÄISCHE PATENTSCHRIFT**

(45) Veröffentlichungstag der Patentschrift: **29.07.92**

(51) Int. Cl.⁵: **G01M 11/08**

(21) Anmeldenummer: **88119566.3**

(22) Anmeldetag: **24.11.88**

(54) **Verfahren zum Herausführen von lichtleitenden Fasern aus faserverstärkten Verbundwerkstoffen.**

(30) Priorität: **27.11.87 DE 3740272**

(43) Veröffentlichungstag der Anmeldung:
**31.05.89 Patentblatt 89/22**

(45) Bekanntmachung des Hinweises auf die
Patenterteilung:
**29.07.92 Patentblatt 92/31**

(84) Benannte Vertragsstaaten:
**FR GB IT**

(56) Entgegenhaltungen:
**CH-A- 579 782**
**GB-A- 2 136 119**

(73) Patentinhaber: **Deutsche Airbus GmbH**
**Kreetslag 10**
**W-2103 Hamburg 93(DE)**

(72) Erfinder: **Fischer, Manfred**
**Besselstrasse 41**
**W-2800 Bremen(DE)**
Erfinder: **Hofer, Bernd, Dr.**
**Osnabrücker Strasse 2**
**W-2874 Lemwerder(DE)**

Rank Xerox (UK) Business Services

EP 0 317 994 B1

# Beschreibung

Die Erfindung bezieht sich auf ein Verfahren zum Herausführen von beim Herstellen von Bauteilen aus faserverstärkten Verbundwerkstoffen zwischen den Schichten als Rißsensoren verlegbaren lichtleitenden Fasern.

Zur Überwachung von Strukturbauteilen ist es schon vorgeschlagen worden, Lichtleitfasern, insbesondere in Bauteile aus faserverstärkten Verbundwerkstoffen zu verlegen und den Lichtdurchgang solcher Fasern auszuwerten. Das Verlegen von lichtleitenden Fasern ist aber problematisch, da die herausgeführten Fasern ohne besonderen Schutz das Behandeln solcher Bauteile behindern. Außerdem muß gewährleistet werden, daß die das Bauteil verlassenden Fasern beim Aushärten in einem Autoklav durch den hohen Druck nicht beschädigt werden und nicht miteinander verkleben. Ohne besondere Maßnahmen ist daher das Verlegen und Herausführen von lichtleitenden Fasern nicht möglich.

Der Erfindung liegt daher die Aufgabe zugrunde, ein Verfahren zum Herausführen von lichtleitenden Fasern beim Herstellungsprozeß faserverstärkter Verbundwerkstoffe vorzusehen, das einfache Verfahrensschritte und einwandfrei herausgeführte Fasern gewährleistet. Diese Aufgabe ist erfindungsgemäß durch die Kennzeichenmerkmale des Anspruchs 1 gelöst.

Vorteilhafte Weiterbildungen und Vorrichtungen zur Durchführung des Verfahrens sind den Ansprüchen 2 bis 6 zu entnehmen.

Das erfindungsgemäße Verfahren und die erfindungsgemäße Vorrichtung gewährleisten einwandfrei herausgeführte Faserenden, und damit das Ankoppeln eines Anschlußgliedes für eine Lichtversorgungs-und/oder Auswerteeinheit. Die Andruckvorrichtung schützt dabei die in der konusförmigen Bohrung geführten Fasern beim Aushärten im Autoklav, da diese Bohrung durch die Abdeckung druckfrei bleibt bzw. einem verminderten Druck ausgesetzt ist. Diese Abdeckung stoppt daher den Harzfluß an der Faseraustrittsstelle, der sonst beim Aushärten, aufgrund seiner Tendenz in Hohlräume zu fließen, auftreten und die Faserenden verkleben würde. Das Fixieren der Faserenden an der Faseraustrittsstelle und das Verhindern des Harzflusses in die Hohlräume wird mit einem hinreichend temperatur- und druckbeständigen Gießharz gewährleistet. Hierfür ist zweckmäßigerweise temperaturbeständiges Gieß- oder Laminierharz zu verwenden, wodurch sich der Vorteil, die Laminatstruktur des Bauteils nicht zu beeinträchtigen, ergibt.

Die Erfindung wird anhand der Zeichnungen näher erläutert. Es zeigen:

Fig. 1    einen Schnitt durch eine Andruckvorrichtung,

Fig. 2    das Prinzip des erfindungsgemäßen Verfahrens beim Laminieren senkrecht zur Faserrichtung herauszuführender Fasern,

Fig. 3    das Prinzip seitlich herauszuführender Fasern.

Fig. 4    das Einfüllen von Laminierharz in eine Faseraustrittsstelle und

Fig. 5    ein in einem Autoklav zum Aushärten angeordnetes Bauteil

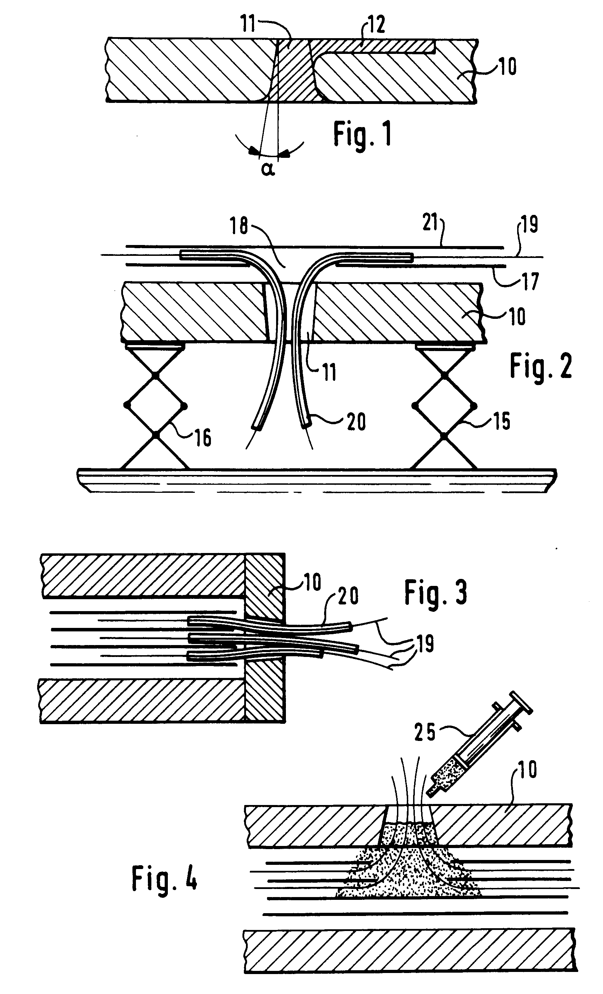

Wie die Darstellung nach Fig. 1 zeigt, ist eine als flaches Bauteil ausgebildete Andruckvorrichtung 10 mit einer konischen Bohrung 11 und einer Aussparung 12 auf der Außenseite versehen. Der Neigungswinkel α der konischen Bohrung ist zweckmäßigerweise auf 2-5° bemessen, so daß sich ein Konuswinkel von 4-10° ergibt.

Das Herstellen von Bauteilen aus geschichteten Faserverbundwerkstoffen mit als Rißsensoren eingebetteten lichtleitenden Fasern zeigt. Fig. 2. Zwischen zwei Stützen 15, 16 ist die Andruckvorrichtung 10 so aufgelegt, daß die konische Bohrung mit ihrem grösseren Durchmesser oben liegt. Auf diese Andruckvorrichtung werden dann die einzelnen Schichten vorzugsweise sog. Prepregschichten mit den dazwischen zu verlegenden lichtleitenden Fasern verlegt.

Wie diese Darstellung zeigt, werden auf die erste mit einer Faseraustrittsstelle 18 verlegte Schicht 17, die lichtleitenden Fasern 19 mit einem übergestreiften Teflonschlauch 20 so aufgelegt, daß die Schläuche der durch die konische Bohrung 11 nach unten durchgesteckten Faserenden von der nachfolgenden Schicht 21 eingeklemmt werden. Weitere Schichten werden dann im erforderlichen Maße auf die Schicht 21 aufgelegt. Die übergestreiften Teflonschläuche werden um die beabsichtigte Lage einzuhalten, im Übergangsbereich mit einem Laminierharz fixiert. Fig. 3 zeigt das Herstellen eines faserverstärkten Verbundbauteils mit seitlich herausgeführten lichtleitenden Fasern.

Beim Herstellen von Bauteilen aus faserverstärkten Verbundwerkstoffen muß verhindert werden, daß sich die Teflonschläuche, die einen Außendurchmesser von 0,8 - 0,9 mm und einen Innendurchmesser von 0,3 - 0,5 mm haben können, während des Aushärtens in einem Autoklav vollsaugen. Deshalb ist es sinnvoll vor dem Auflegen einer Prepregschicht die einzuklemmenden Schlauchenden mit dem kaltaushärtenden Laminierharz zu verschließen. Hierfür kann zweckmäßigerweise ein Harz mit gegen die Temperatur im Autoklav etwas geringerer Beständigkeit gewählt werden, so daß dieses Harz im Autoklav zwar weich aber nicht flüssig wird. Auf diese Weise wird dann ein weiteres Eindringen des Harzes in die Teflonschläuche verhindert

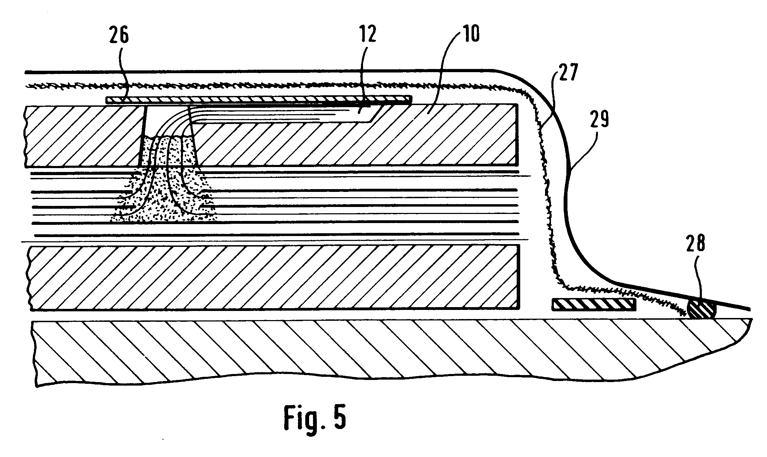

Vor dem Aushärten eines Bauteils im Autoklav muß die Faseraustrittsstelle ebenfalls mit einem bis in die konische Bohrung reichenden Laminierharz verschlossen werden. Es hat sich dabei herausgestellt, daß das Harz, wie Fig. 4 zeigt, bis etwa 5 mm in die konische Bohrung 11 reichen muß, um einwandfrei hergestellte Bauteile zu erhalten. Das Füllen der Faseraustrittsstelle kann auf einfache Weise mit einer Spritze 25 erfolgen, aber es muß sichergestellt werden, daß sich an dieser Stelle kein Saug- oder Trenngewebe befindet, damit die entstehende Aufwerfung fest am Bauteil haftet. Für das Harz muß ein mit dem Verbundbauteil verträgliches Harz benutzt werden, das in hinreichender Zeit kalt aushärtet und beim Aushärteprozeß im Autoklav keine Verformung mehr zuläßt.

Wie Fig. 5 zeigt, werden die über die Andurckvorrichtung 10 herausragenden mit Teflonschläuchen 20 geschützten Fasern 19 nach dem Aushärten des Gießharzes in der Faseraustrittsstelle in die Aussparung 12 gelegt und anschließend mit einer Abdeckung 26, z. B. einem Blech verdeckt. Auf diese Weise bleiben die herausgeführten Fasern beim Aushärten in einem Autoklav druckfrei, so daß die Faserenden nicht beschädigt werden. Die so herausgeführten und mit Kennzeichnungen versehenen Fasern können dann mit einem Anschlußglied (Interface) verbunden werden. Die Darstellung nach Fig. 5 zeigt ein in einem Autoklav aushärtendes faserverstärktes Verbundbauteil, das mit einem Glasgewebe 27 und einer mit Dichtungsmasse 28 abgedichteten Autoklavfolie 29 abgedeckt ist.

**Patentansprüche**

1. Verfahren zum Herausführen von beim Herstellen von Bauteilen aus faserverstärkten Verbundwerkstoffen zwischen den Schichten als Rißsensoren verlegbaren lichtleitenden Fasern **gekennzeichnet durch**
   a) Überstreifen der Faserenden mit einem von den Schichten einklemmbaren Teflonschlauch (20),
   b) Verschließen der einklemmbaren Schlauchenden mit kaltaushärtendem Laminierharz,
   c) Einführen der die Fasern schützenden Teflonschläuche (20) in eine an der Faseraustrittsstelle (18) vorgesehene konische Bohrung (11) einer Andruckvorrichtung (10),
   d) Füllen der Faseraustrittsstelle (18) bis in die konische Bohrung (11) der Andruckvorrichtung (10) mit Laminierharz,
   e) Aushärten des Bauteils im Autoklav mit einer die teflongeschützten Fasern druckfreihaltenden Abdeckung (26).

2. Verfahren nach Anspruch 1, **dadurch gekenn-**

**zeichnet,** daß die lichtleitenden Fasern durch die Faseraustrittsstelle (18) nach unten herausgeführt werden, und daß nachfolgende Schichten (21) des Verbundwerkstoffes darüber verlegt werden.

3. Verfahren nach Anspruch 1, **dadurch gekennzeichnet,** daß die durch die Teflonschläuche (20) geschützten lichtleitenden Fasern mittels einer Nadel durch die letzte(n) Schicht(en) des Prepregs gefädelt werden.

4. Verfahren nach Anspruch 1 oder 2, **dadurch gekennzeichnet,** daß die herausführbaren Faserenden mit temperaturbeständigen Kennzeichnungen, wie Nummern, Buchstaben, Farben oder unterschiedlichen Schlauchlängen versehen werden.

5. Vorrichtung zur Durchführung des Verfahrens nach einem der Ansprüche 1 bis 4, **dadurch gekennzeichnet,** daß die konische Bohrung (11) in der Andruckvorrichtung (10) in ihrem Durchmesser der Anzahl der herauszuführenden Faserenden angepaßt ist und einen Konuswinkel von 4 - 10° besitzt.

6. Vorrichtung nach Anspruch 5, **dadurch gekennzeichnet,** daß die Andruckvorrichtung (10) eine Aussparung (12) zur Aufnahme der herausgeführten und mit der Abdeckung (26) schützbaren Faserenden aufweist.

**Claims**

1. Process for bringing out optical fibres which, when manufacturing components made of fibre-reinforced composite materials, may be laid as crack detectors between layers, characterized by
   a) sheathing of the fibre ends in a Teflon tube (20) which may be clamped in by the layers,
   b) closure of the clampable tube ends with a cold-curing laminating resin,
   c) introduction of the Teflon tubes (20) protecting the fibres into a conical bore (11) of a contact pressure apparatus (10) provided at the fibre exit point (18),
   d) filling of the fibre exit point (18) with laminating resin as far as into the conical bore (11) of the contact pressure apparatus (10),
   e) curing of the component in the autoclave with a cover (26) which keeps the Teflon-protected fibres free of pressure.

2. Process according to claim 1, characterized in that the optical fibres are brought out downwards through the fibre exit point (18), and that subsequent layers (21) of the composite material are laid on top.

3. Process according to claim 1, characterized in that the optical fibres protected by the Teflon tubes (20) are threaded by means of a needle through the last layer(s) of the prepreg.

4. Process according to claim 1 or 2, characterized in that the fibre ends which may be brought out are provided with temperature-resistant identification markings such as numbers, letters, colours or different tube lengths.

5. Apparatus for effecting the process according to one of claims 1 to 4, characterized in that the conical bore (11) in the contact pressure apparatus (10) has a diameter adapted to the number of fibre ends to be brought out and has a cone angle of 4 - 10°.

6. Apparatus according to claim 5, characterized in that the contact pressure apparatus (10) has a recess (12) for receiving the fibre ends which are brought out and may be protected by the cover (26).

**Revendications**

1. Procédé pour sortir des fibres conductrices de lumière, lors de la production d'éléments de construction en matériaux composites à renforcement par fibres, déposables entre les couches, comme détecteurs de fissures, caractérisé par les étapes suivantes :
   a) recouvrement des extrémités de fibres avec une gaine en téflon (20) pouvant être coincées par les couches,
   b) fermeture des extrémités de la gaine pouvant être coincée par de la résine pour stratifiés durcissant à froid,
   c) introduction des gaines en téflon (20) de protection des fibres dans un perçage (11) conique prévu à un emplacement de sortie des fibres (18) d'un dispositif de serrage (10),
   d) remplissage de l'emplacement de sortie des fibres (18) jusque dans le perçage conique (11) du dispositif de serrage (10) avec de la résine pour stratifiés,
   e) durcissement de l'élément de construction en autoclave avec un cache (26) maintenant hors de pression les fibres protégées par le téflon.

2. Procédé selon la revendication 1, caractérisé en ce que :
   - les fibres conductrices de lumière sont sorties vers le bas à travers l'emplacement de passage des fibres (18),
   - les couches (21) suivantes du matériau composite sont déposées par en dessus.

3. Procédé selon la revendication 1, caractérisé en ce que les fibres conductrices de lumière, protégées par des gaines de téflon, sont enfilées au moyen d'une aiguille à travers la ou les dernière(s) couche(s) du pré-imprégné.

4. Procédé selon les revendications 1 ou 2, caractérisé en ce que les extrémités des fibres sorties sont munies de marquages résistants à la température, comme des numéros, des lettres, des couleurs ou des longueurs de gaine différentes.

5. Dispositif pour réalisation du procédé selon une des revendications 1 à 4, caractérisé en ce que le perçage conique (11) dans le dispositif de serrage (10) a son diamètre adapté au nombre d'extrémités de fibres à sortir et comporte un angle de cône de 4 à 10°.

6. Dispositif selon la revendication 5, caractérisé en ce que le dispositif de serrage (10) a un évidement (12) destiné à recevoir les extrémités de fibre sorties et pouvant être protégées par le cache (26).

11  12  10

**Fig. 1**

α

18  21  19

17  10

11

16  20  15

**Fig. 2**

10  20  **Fig. 3**

19

25  10

**Fig. 4**

Fig. 5